# EUROPEAN PATENT APPLICATION

(11) **EP 4 485 625 A1**
(43) Date of publication of application: **01.01.2025**
(21) Application number: 23208707.2
(22) Date of filing: 09.11.2023
(51) Int. Cl.: H01M 10/6551, H01M 10/6567, H01M 50/204

(54) **ENERGY STORAGE SYSTEM**

(30) Priority: 27.06.2023 CN 202321666247 U
(71) Applicant: Sungrow Energy Storage Technology Co., Ltd., Hefei, Anhui 230088 (CN)
(72) Inventor: GUO, Jian, Hefei, Anhui (CN); FANG, Ri, Hefei, Anhui (CN); GAO, Yuan, Hefei, Anhui (CN)
(74) Representative: Zacco Norway AS

(57) **Abstract**

An energy storage system is provided, which includes a structural cabinet, and a battery module and a thermal management unit mounted in the structural cabinet. The thermal management unit includes a liquid cooling unit, an air-cooling heat dissipation module, and a liquid cooling management module for managing the distribution of a cooling liquid of the liquid cooling unit. The liquid cooling unit, the air-cooling heat dissipation module, and the liquid cooling management module are separately mounted and arranged in a split manner in the structural cabinet. Compared with the conventional one-piece thermal management unit, the energy storage system is divided into three functional modules, the size of each functional module is greatly reduced, which facilitates the arrangement and the full utilization of available space of the structural cabinet, and ultimately facilitates the improvement of the integration level of the entire energy storage system, in this way, more battery modules can be arranged in a limited space, that is, the overall power density of the entire energy storage system is improved.

## Description

### FIELD

The present application relates to the technical field of the structural arrangement of equipment, and in particular to an energy storage system.

### BACKGROUND

With the rapid development of the energy storage industry, the requirement for the power density of the system is getting higher and higher during the development of large-scale energy storage devices. At present, the layout of an energy storage system, from the perspective of structural modules, mainly includes a structural cabinet, a battery module, a PCS module (i.e. a Power Conversion System module, or a switch box, or a DC/DC converter module), a thermal management system, an electrical module, and a fire-fighting module. The conventional energy storage system has relatively routine arrangement, and a thermal management system thereof mainly employs a one-piece thermal management unit. However, this type of thermal management unit is weak in meeting customized requirements in terms of contour dimensions, hence the flexibility of the arrangement plan of the thermal management unit is limited, and the overall spatial layout of the system cannot be effectively improved, ultimately resulting in a low power density of the entire machine.

To sum up, an urgent technical problem to be solved by those skilled in the art is to solve the problem of low overall power density caused by the layout of the thermal management unit of the energy storage system being limited.

### SUMMARY

An energy storage system is provided according to the present application to solve the problem of low overall power density caused by the layout of the thermal management unit of the energy storage system being limited.

To achieve the above object, the following technical solutions are provided according to the present application.

An energy storage system includes a structural cabinet, and a battery module and a thermal management unit mounted in the structural cabinet. The thermal management unit includes a liquid cooling unit, an air-cooling heat dissipation module, and a liquid cooling management module used for managing the distribution of a cooling liquid of the liquid cooling unit. The liquid cooling unit, the air-cooling heat dissipation module, and the liquid cooling management module are separately mounted and arranged in a split manner in the structural cabinet.

In an embodiment, the air-cooling heat dissipation module is of a flat structure and is arranged at a top of the structural cabinet.

In an embodiment, an explosion venting mounting area is reserved at a top of the structural cabinet, and the explosion venting mounting area is configured for mounting an explosion venting assembly.

In an embodiment, the liquid cooling unit and the liquid cooling management module are arranged adjacent to each other, and both of them are arranged on a same end side of the structural cabinet.

In an embodiment, both the liquid cooling unit and the liquid cooling management module are arranged adjacent to the air-cooling heat dissipation module.

In an embodiment, a fire-fighting module, an electrical cabinet, and a wiring cabinet are also mounted in the structural cabinet, and the fire-fighting module, the electrical cabinet, the wiring cabinet, the liquid cooling unit, and the liquid cooling management module are arranged on the same end side of the structural cabinet.

In an embodiment, the fire-fighting module, the electrical cabinet, and the wiring cabinet are arranged along a depth direction of the structural cabinet.

In an embodiment, a liquid cooling mounting area is reserved at tops of the fire-fighting module, the electrical cabinet, where the wiring cabinet, and the liquid cooling unit and the liquid cooling management module are mounted in the liquid cooling mounting area.

In an embodiment, the air-cooling heat dissipation module is arranged on a back-side wall of the structural cabinet; alternatively, the air-cooling heat dissipation module is arranged on an end-side wall of the structural cabinet; alternatively, the air-cooling heat dissipation module is arranged on a front-side wall of the structural cabinet.

In an embodiment, in the case that the air-cooling heat dissipation module is arranged on the front-side wall of the structural cabinet, at least one cabinet door that is configured to be opened or closed is provided at the front-side wall, the air-cooling heat dissipation module is arranged on the at least one cabinet door; wherein in a case that the number of the cabinet door is more than one, the number of the air-cooling heat dissipation modules is also more than one, and the air-cooling heat dissipation modules on any two of the cabinet doors are independent of each other.

In an embodiment, a PCS module is further mounted in the structural cabinet, and the PCS module is arranged below the battery module.

Compared with the background technology, the above energy storage system includes the structural cabinet and the battery module and the thermal management unit mounted in the structural cabinet, the thermal management unit includes the liquid cooling unit, the air-cooling heat dissipation module, and the liquid cooling management module for managing the distribution of the cooling liquid of the liquid cooling unit; and the liquid cooling unit, the air-cooling heat dissipation module, and the liquid cooling management module are separately mounted and arranged in a split manner in the structural cabinet. In actual implementation of this energy storage system, the thermal management unit is divided into three structures, namely, the liquid cooling unit, the air-cooling heat exchange module, and the liquid cooling management module, and the three are separately mounted and arranged in a split manner in the structural cabinet. Compared with the conventional one-piece thermal management unit, the entire thermal management unit is divided into three functional modules, and the size of each functional module is greatly reduced, which facilitates the arrangement and the full utilization of available space of the structural cabinet, and ultimately facilitates the improvement of the integration level of the entire energy storage system, in this way, more battery modules can be arranged in a limited space, that is, the overall power density of the entire energy storage system is improved.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.

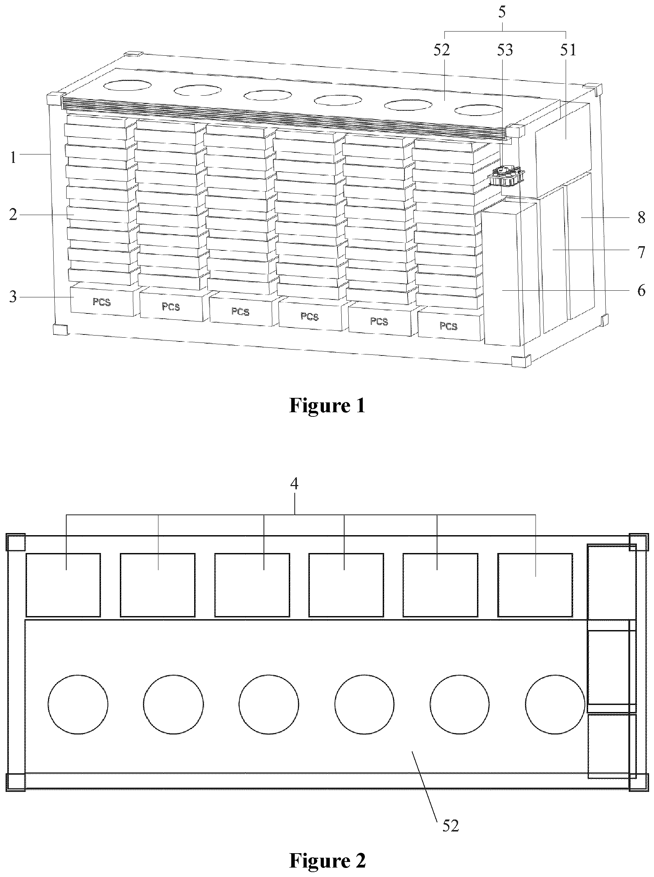

Figure 1 is a schematic perspective view showing the structural layout of an energy storage system according to an embodiment of the present application in a case that an air-cooling heat dissipation module is arranged at a top of a structural cabinet, and a liquid cooling unit and a liquid cooling management module are arranged on one end side of a battery module;
Figure 2 is a schematic top view showing the structural layout of the energy storage system according to the embodiment of the present application in the case that the air-cooling heat dissipation module is arranged at the top of the structural cabinet, and the liquid cooling unit and the liquid cooling management module are arranged on the one end side of the battery module;

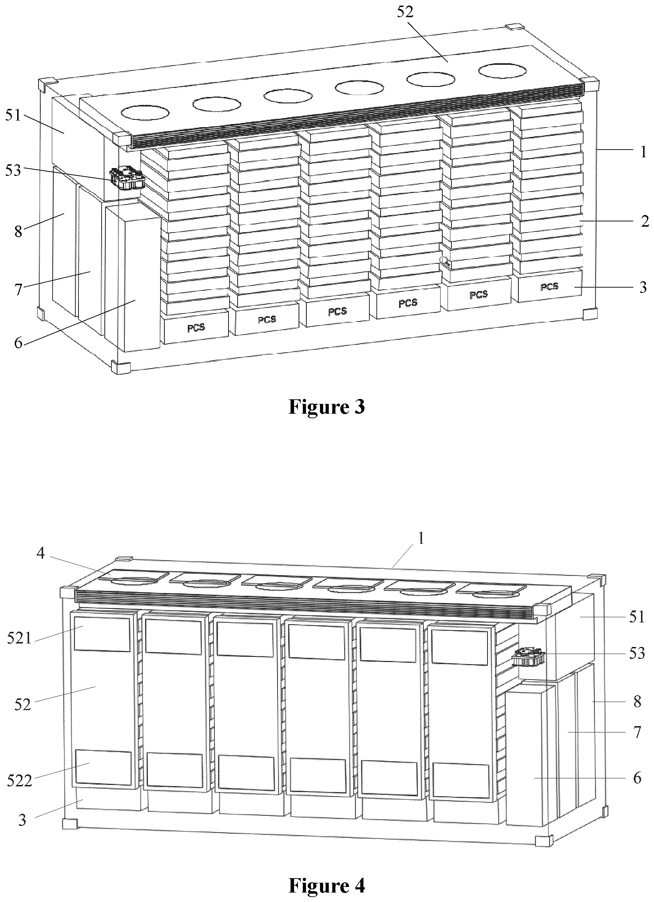

Figure 3 is a schematic perspective schematic showing the structural layout of the energy storage system according to the embodiment of the present application in a case that an air-cooling heat dissipation module is arranged at the top of the structural cabinet, and the liquid cooling unit and the liquid cooling management module are arranged on the other end side of a battery module;
Figure 4 is a schematic perspective schematic showing the structural layout of an energy storage system according to an embodiment of the present application in a case that an air-cooling heat dissipation module is arranged on a front-side wall of a structural cabinet;

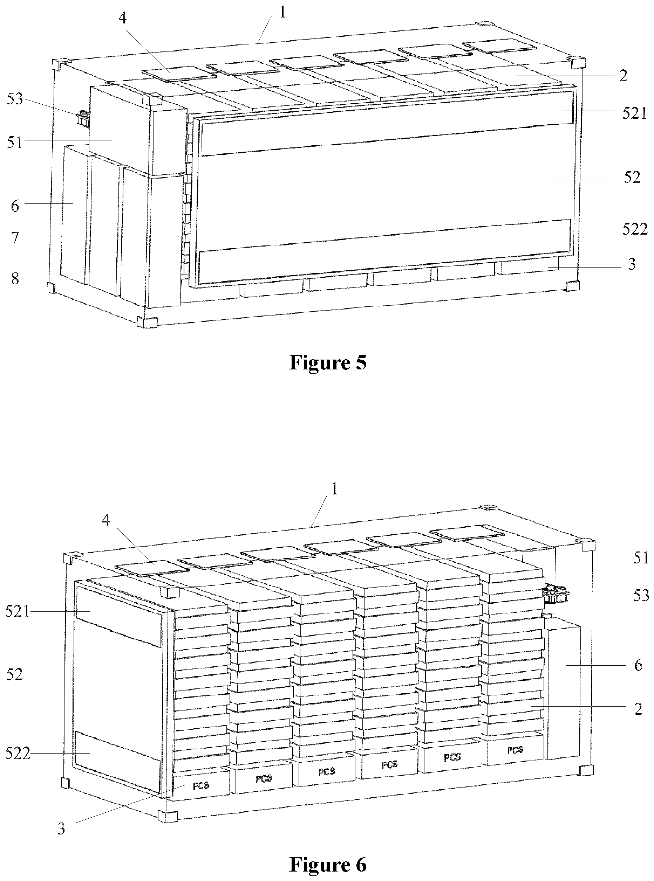

Figure 5 is a schematic perspective schematic showing the structural layout of an energy storage system according to an embodiment of the present application in a case that an air-cooling heat dissipation module is arranged on a back-side wall of a structural cabinet;
Figure 6 is a schematic perspective schematic showing the structural layout of an energy storage system according to an embodiment of the present application in a case that an air-cooling heat dissipation module is arranged on an end-side wall of a structural cabinet.

**Reference numerals:**

| | | | |
|---|---|---|---|
| 1 | structural cabinet, | 2 | battery module, |
| 3 | PCS module, | 4 | explosion venting assembly, |
| 41 | explosion venting part, | 42 | explosion venting guide part, |
| 5 | thermal management unit, | 51 | liquid cooling unit, |
| 52 | air-cooling heat dissipation module, | 521 | air inlet, |
| 522 | air outlet, | | |
| 53 | liquid cooling management module, | 6 | fire-fighting module, |
| 7 | electrical cabinet, | 8 | wiring cabinet. |

### DETAILED DESCRIPTION OF THE EMBODIMENTS

The core of the present application is to provide an energy storage system to solve the problem of low power density of the entire machine caused by the layout of a thermal management unit of the energy storage system being limited.

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

As shown in Figures 1 to 6, an energy storage system is provided according to the present application, including a structural cabinet 1, and a battery module 2 and a thermal management unit 5 mounted in the structural cabinet 1. The thermal management unit 5 is mainly used for temperature control of the structural cabinet 1, specifically, for cooling and heat dissipation, or for preheating during startup, which can be configured according to actual requirements in practical application. The thermal management unit 5 specifically includes a liquid cooling unit 51, an air-cooling heat dissipation module 52, and a liquid cooling management module 53 for managing the distribution of a cooling liquid of the liquid cooling unit 51. Specifically, the liquid cooling management module 53 may be a multiport valve assembly. A circulation loop is established between the liquid cooling unit 51 and a heat exchanger of the battery module 2 through the liquid cooling management module 53, and thus the liquid cooling unit 51 is able to adjust the temperature of the battery module 2, to make the operation of the battery module 2 more stable. Moreover, the liquid cooling unit 51, the air cooling heat dissipation module 52, and the liquid cooling management module 53 are separately mounted and arranged in a split manner in the structural cabinet 1. Herein, the liquid cooling unit is the cooling or heating unit of the energy storage system, which is configured to perform cooling or heating to the cooling liquid by an internal compressor unit thereof, and drive the circulation of the cooling liquid by an internal circulating pump thereof, to realize thermal management function of the energy storage system.

In practical applications of the energy storage system, the thermal management unit 5 is divided into the liquid cooling unit 51, the air-cooling heat exchange module 52, and the liquid cooling management module 53, and the three are separately mounted and arranged in a split manner in the structural cabinet 1. Compared with the conventional one-piece thermal management unit, the entire thermal management unit 5 is divided into three functional modules, the size of each functional module is greatly reduced, which facilitates the arrangement and the full utilization of available space of the structural cabinet, and ultimately facilitates the improvement of the integration level of the entire energy storage system, in this way, more battery modules can be arranged in a limited space, that is, the overall power density of the entire energy storage system is improved.

In some specific solutions, referring to Figures 1 to 3, the air-cooling heat dissipation module 52 may be of a flat structure and be arranged at a top of the structural cabinet 1. With the air-cooling heat dissipation module 52 being designed as a flat structure, the air-cooling heat dissipation module 52 can better utilize the space at the top of the structural cabinet 1.

In addition, since the air-cooling heat dissipation module 52 does not need to occupy the entire area of the top of the structural cabinet 1, a certain area of the top of the structural cabinet 1 can be reserved at a rear end in a depth direction of the structural cabinet 1 structural cabinet for use of the explosion venting function (currently, through product investigation, the designers and the clients prefer the solution that explosion venting is provided at the top, and it is required that there're no components above the explosion venting area because the explosion venting area cannot be covered). In this way, in the layout of the top space of the structural cabinet 1, the air-cooling heat dissipation module and the explosion venting area can be effectively combined to improve the space utilization at the top. Specifically, in addition to the air-cooling heat dissipation module 52 being mounted at the top of the structural cabinet 1, an explosion venting mounting area may be further reserved at the top of the structural cabinet 1, and the explosion vent mounting area is configured for mounting an explosion venting assembly 4. The potential safety hazard, that a door of the structural cabinet 1 may be blown off to hurt people caused by an explosion inside the structural cabinet 1, can be prevented by using the explosion venting assembly 4. It should be noted that the depth direction of the structural cabinet 1 is defined based on one side, where the door is located, of the structural cabinet 1, and the depth direction refers to a direction from the one side, where the door is located, of the structural cabinet 1 toward the other side, opposite to the one side, of the structural cabinet 1.

It can be understood that alternatively, the explosion venting assembly 4 may be mounted at other positions, other than the top of the structural cabinet 1, according to actual requirements. For example, the explosion venting assembly 4 may be mounted on a front-side wall of the structural cabinet 1. In the case that explosion venting from the front side is employed, explosion pressure and flame released to the surrounding environment when the explosion venting assembly 4 is completely opened can harm surrounding objects and people, in this case, an explosion venting guide structure is further mounted to mitigate and reduce the harm to objects and people caused by explosion venting. In this way, the explosion venting assembly 4 specifically includes an explosion venting part and an explosion venting guide part. The explosion venting part is mainly configured to start pressure relief when the pressure in the structural cabinet 1 exceeds a preset pressure, and the specific structural form of the explosion venting part may be an explosion venting plate, or other conventional explosion venting structure commonly used by those skilled in the art, which is not specifically limited herein. The explosion venting guide part is mainly configured to guide the pressure relief airflow when the explosion venting part is started, and specifically, it may be a guide plate mounted on the explosion venting plate, or may be of other structures for guiding the airflow. With the above structural form of the explosion venting assembly 4, the explosion venting part can be automatically started for pressure relief when an explosion occurs inside the structural cabinet 1. The explosion venting guide part guides and releases the pressure airflow and flames, so that the hazard degree of explosion is reduced, which minimizes the harm to surrounding objects and people during the explosion of the system.

In another solution, the explosion venting assembly 4 is mounted on a back-side wall of the structural cabinet 1. Alternatively, the explosion venting assembly 4 may be mounted on an end-side wall of the structural cabinet 1. In practical applications, the specific arrangement can be made according to actual requirements.

It should be noted that the front-side wall and the rear-side wall in the present application are defined based on the structural cabinet 1 itself. The front-side wall is the wall located at the one side, where the door is located, of the structural cabinet 1, and the rear-side wall is the wall located at the other side, opposite to the one side, of the structural cabinet 1. In addition, it can be understood by those skilled in the art that, since the main electrical component mounted in the structural cabinet 1 is the battery module 2, that is, the battery module 2 occupies the largest space in the structural cabinet 1, an end side of the battery module 2 is also the end side of the structural cabinet 1, and the end side of the structural cabinet 1 refers to a left side or a right side from the perspective facing the side of the structural cabinet 1 where the cabinet door is located.

In a further solution, the liquid cooling unit 51 and the liquid cooling management module 53 are preferably designed to be arranged adjacent to each other, and both of them are arranged on the same end side of the structural cabinet 1. With this arrangement, the liquid cooling unit 51 and the liquid cooling management module 53 are spatially adjacent to each other, facilitating the pipeline layout among the functional modules in the later stage. Moreover, both the liquid cooling unit 51 and the liquid cooling management module 53 are preferably arranged to be adjacent to the air-cooling heat dissipation module 52. With this arrangement, the pipeline and electrical communication arrangements among the functional modules are more convenient in the later stage.

In some other specific solutions, a fire-fighting module 6, an electrical cabinet 7, and a wiring cabinet 8 may be further mounted in the structural cabinet 1. The fire-fighting module 6, the electrical cabinet 7, the wiring cabinet 8, the liquid cooling unit 51, and the liquid cooling management module 53 are arranged on the same end side of the structural cabinet 1, and specifically, may be arranged on a left end side of the structural cabinet 1, or a right end side of the structural cabinet 1. The left end side and the right end side here are defined from the perspective facing the side of the structural cabinet 1 where the cabinet door is located. With the above five parts being arranged on the same end side of the structural cabinet 1, they are spatially adjacent to each other, facilitating the pipeline and electrical communication arrangements among various functional modules in the later stage.

In a further solution, the fire-fighting module 6, the electrical cabinet 7, and the wiring cabinet 8 may be arranged along the depth direction of the structural cabinet 1, for example, arranged in sequence along the depth direction of the structural cabinet 1. The sequence of the three may be changed according to requirements. In addition, a liquid cooling mounting area may be reserved at tops of the fire-fighting module 6, the electrical cabinet 7, and the wiring cabinet 8, and the liquid cooling unit 51 and the liquid cooling management module 53 are mounted in the liquid cooling mounting area. With this arrangement, the structural layout is more compact and the space utilization rate is higher, which increases the installed capacity of the battery module 2 on the premise that the size of the structural cabinet 1 is unchanged.

In some other specific solutions, the mounting position of the air-cooling heat dissipation module 52 can be selected according to the arrangement requirements. Apart from being arranged at the top of the structural cabinet 1, the air-cooling heat dissipation module 52 may be arranged on the back-side wall of the structural cabinet 1, as shown in Figure 5; alternatively, the air-cooling heat dissipation module 52 may be arranged on the end-side wall of the structural cabinet 1, as shown in Figure 6; alternatively, the air-cooling heat dissipation module 52 may be arranged on the front-side wall of the structural cabinet 1, as shown in Figure 4. In practical applications, the arrangement may be made according to specific requirements, which is not limited herein. It should be noted that, the air-cooling heat dissipation module 52 generally includes an air inlet 521 and an air outlet 522. Specifically, the air inlet 521 may be arranged at an upper portion of the air-cooling heat dissipation module 52, and the air outlet 522 may be arranged at a lower portion of the air-cooling heat dissipation module 52; alternatively, the air inlet 521 may be arranged at the lower portion of the air-cooling heat dissipation module 52, and the air outlet 522 may be arranged at the upper portion of the air-cooling heat dissipation module 52. In practical applications, the arrangement may be selected according to actual requirements, which is not limited herein.

In some specific solutions, according to the general structural dimensions of the structural cabinet 1, the overall area of the front-side wall or the back-side wall of the structural cabinet 1 is generally much larger than the overall area of a top-side wall of the structural cabinet 1. Therefore, with the air-cooling heat dissipation module 52 being arranged on the front-side wall of the structural cabinet 1, the heat dissipation area is greatly increased, which facilitates the improvement of the overall heat exchange efficiency of the heat management system.

In addition, in the case that the air-cooling heat dissipation module 52 is arranged on the front-side wall of the structural cabinet 1, as shown in Figure 4, at least one cabinet door that can be opened and closed may be provided on the front-side wall of the structural cabinet 1, and the air-cooling heat dissipation module 52 is arranged on the cabinet door. In the case that the number of the cabinet door is more than one, the number of the air-cooling heat dissipation module 52 is also more than one, and the air-cooling heat dissipation modules 52 on any two cabinet doors are independent of each other. With this arrangement, the loading space corresponding to each cabinet door can achieve air cooling and heat dissipation independently, and maintenance is more convenient.

In some specific solutions, a PCS module 3 is further mounted in the structural cabinet 1. As shown in Figure 1, the PCS module 3 is generally arranged below the battery module 2. By arranging the PCS module 3 below the battery module 2, the electrical communication connection between the PCS module 3 and the battery module 2 is more convenient. It should be noted that, a thermal insulation layer may be provided between the PCS module 3 and the battery module 2. The thermal insulation layer is configured to perform thermal insulation between a battery cluster compartment where the battery module 2 is located and a mounting compartment where the PCS module 3 is located. According to the actual operation of large-scale energy storage systems, the probability of an ignition caused by electrical arcing inside PCS module 3 is too much higher than the probability of an ignition caused by thermal runaway of the battery cluster itself, the thermal insulation layer arranged between the PCS module 3 and the battery module 2 can effectively reduce the risk of thermal diffusion to the battery module 2 caused by arc ignition inside the PCS module 3. Even if the electrical arcing occurs inside the PCS module 3 and causes an ignition, under the action of the thermal insulation layer, flame generated by the arcing of the PCS Module 3 mainly spreads in a direction away from the thermal insulation layer.

It should be noted that, the PCS module 3 being mounted below the battery module 2 is merely an example of the embodiments of the present application. In practical applications, the PCS module 3 may be arranged at other positions according to actual requirements. For example, the PCS module 3 may be arranged at a top of the battery module 2, or, at an end side of the battery module 2.

In the case that the PCS module 3 is arranged at the top of the battery module 2, the PCS module 3 occupies the dimension of the structural cabinet 1 in the depth direction. In this case, if the explosion venting assembly 4 is to be mounted, the explosion venting assembly 4 is obviously not suitable to be mounted on the top-side wall of the structural cabinet 1, instead, the explosion venting assembly 4 can be mounted on the front-side wall and/or the back-side wall.

In the case that the PCS module 3 is arranged on the end side of the battery module 2, the explosion venting assembly 4 may be mounted on the front-side wall of the structural cabinet 1, may be mounted on the back-side wall of the structural cabinet 1, may be mounted on the top-side wall of the structural cabinet 1, or may be mounted on a wall located at the other end side, which is opposite to the end side where the PCS module 3 is located, of the structural cabinet 1. In practical applications, the arrangement may be made according to actual requirements, which is not limited here.

It should be noted that, the embodiments in the specification are described in a progressive manner. Each of the embodiments is mainly focused on describing its differences from other embodiments, and references may be made among these embodiments with respect to the same or similar portions among these embodiments.

It should be understood that the terms "system", "device", "unit" and/or "module" used in the present application are only for distinguishing different modules, elements, components, parts, or assemblies at different levels. However, if other words can achieve the same purpose, the terms can be replaced by other expressions.

As shown in the present application and the claims, unless exceptions are clearly indicated in the context, the words such as "a", "an", "one" and/or "the" do not specifically refer to the singular, but may also include the plural. Generally speaking, the terms "include" and "comprise" only used to imply that steps and elements that have been clearly identified are included, these steps and elements do not constitute an exclusive list, and a method or a device may further include other steps or elements. An element limited by the statement "comprises a... " does not exclude the existence of other identical elements in a process, method, product, or device that includes the element.

In the description of the embodiments of the present application, unless otherwise stated, "/" represents "or", for example, A/B can represent A or B. The term "and/or" is only an association relationship for describing the associated objects, indicating that there may be three kinds of relationships, for example, A and/or B can indicate three cases: A exists alone, A and B exist at the same time, and B exists alone. In addition, in the description of the embodiments of the present application, "plurality" refers to two or more.

Besides, terms "first" and "second" and the like are only used for description, and should not be understood as indicating or implying relative importance or implicitly indicating the number of indicated technical features. Therefore, features defined with "first" and "second" can explicitly or implicitly include one or more of these features.

The principle and the embodiments of the present application are illustrated herein by specific examples. The above description of examples is only intended to help the understanding of the method and the idea of the present application. It should be noted that, for those skilled in the art, a few of modifications and improvements may be made to the present application without departing from the principle of the present application, and these modifications and improvements are also deemed to fall into the scope of the present application defined by the claims.

## Claims

1. An energy storage system, comprising a structural cabinet (1), a battery module (2) and a thermal management unit (5) mounted in the structural cabinet (1), wherein the thermal management unit (5) comprises a liquid cooling unit (51), an air-cooling heat dissipation module (52), and a liquid cooling management module (53) configured for managing the distribution of a cooling fluid of the liquid cooling unit, and the liquid cooling unit (51), the air-cooling heat dissipation module (52) and the liquid cooling management module (53) are separately mounted and arranged in a split manner in the structural cabinet (1).

2. The energy storage system according to claim 1, wherein the air-cooling heat dissipation module (51) is of a flat structure and is arranged at a top of the structural cabinet (1).

3. The energy storage system according to claim 1, wherein an explosion venting mounting area is reserved at a top of the structural cabinet (1), and the explosion venting mounting area is configured for mounting an explosion venting assembly (4).

4. The energy storage system according to claim 1, wherein the liquid cooling unit (51) and the liquid cooling management module (53) are arranged adjacent to each other, and both of them are arranged on a same end side of the structural cabinet (1).

5. The energy storage system according to claim 4, wherein both the liquid cooling unit (51) and the liquid cooling management module (53) are arranged adjacent to the air-cooling heat dissipation module (52).

6. The energy storage system according to claim 4, wherein a fire-fighting module (6), an electrical cabinet (7), and a wiring cabinet (8) are also mounted in the structural cabinet (1), and the fire-fighting module (6), the electrical cabinet (7), the wiring cabinet (8), the liquid cooling unit (51), and the liquid cooling management module (53) are arranged on the same end side of the structural cabinet (1).

7. The energy storage system according to claim 6, wherein the fire-fighting module (6), the electrical cabinet (7), and the wiring cabinet (8) are arranged along a depth direction of the structural cabinet (1).

8. The energy storage system according to claim 7, wherein a liquid cooling mounting area is reserved at tops of the fire-fighting module (6), the electrical cabinet (7), and wherein the wiring cabinet (8), and the liquid cooling unit (51) and the liquid cooling management module (53) are mounted in the liquid cooling mounting area.

9. The energy storage system according to claim 1, wherein the air-cooling heat dissipation module (52) is arranged on a back-side wall of the structural cabinet (1); or, the air-cooling heat dissipation module (52) is arranged on an end-side wall of the structural cabinet (1); or, the air-cooling heat dissipation module (52) is arranged on a front-side wall of the structural cabinet (1).

10. The energy storage system according to claim 9, wherein in the case that the air-cooling heat dissipation module (52) is arranged on the front-side wall of the structural cabinet (1), at least one cabinet door that is configured to be opened or closed is provided at the front-side wall, the air-cooling heat dissipation module (52) is arranged on the at least one cabinet door; wherein in a case that the number of the cabinet door is more than one, the number of the air-cooling heat dissipation module (52) is also more than one, and the air-cooling heat dissipation modules (52) on any two of the cabinet doors are independent of each other.

11. The energy storage system according to claim 1, wherein a PCS module (3) is further mounted in the structural cabinet (1), and the PCS module (3) is arranged below the battery module (2).
